# EUROPEAN PATENT APPLICATION

(11) **EP 4 753 155 A1**
(43) Date of publication of application: **03.06.2026**
(21) Application number: 25218697.8
(22) Date of filing: 26.11.2025
(51) Int. Cl.: H04B 1/04, H04B 1/12

(54) **REAL TIME FRAME TIMING AWARE RADIO FREQUENCY CONTROLLER FOR 5G WIRELESS SYSTEM**

(30) Priority: 01.12.2024 IN 202441094361
(71) Applicant: NXP B.V., 5656 AG Eindhoven (NL)
(72) Inventor: Agrawal, Girraj Kumar, 5656AG Eindhoven (NL); Chauhan, Pankaj Singh, 5656AG Eindhoven (NL)
(74) Representative: Miles, John Richard

(57) **Abstract**

Embodiments of a radio frequency (RF) controller for a 5G modem, a 5G modem, and a method for operating an RF controller of a 5G modem are disclosed. In an embodiment, an RF controller for a 5G modem includes a timing generator configured to generate a symbol clock signal, a memory unit containing execution boxes (Eboxes) of micro-operations and an index of the Eboxes to be executed in response to detecting a symbol idle period of the symbol clock signal, and an Ebox execution engine configured to execute micro-operations in one of the Eboxes based on the index of the Eboxes to perform an RF maintenance or calibration operation during the symbol idle period.

## Description

### BACKGROUND

Radio frequency (RF) systems, such as 5G systems, typically have a strict implied timing requirement for RF or radio control. Moreover, radio performance is dependent on constantly varying parameters, such as temperature and voltage. RF systems typically perform RF maintenance for temperature variation compensations, transmitter/receiver (TX/RX) path control, and calibration. Such maintenance operations can cause link downtime and/or erratic performance.

### SUMMARY

Embodiments of a radio frequency (RF) controller for a 5G modem, a 5G modem, and a method for operating an RF controller of a 5G modem are disclosed. In an embodiment, an RF controller for a 5G modem includes a timing generator configured to generate a symbol clock signal, a memory unit containing execution boxes (Eboxes) of micro-operations and an index of the Eboxes to be executed in response to detecting a symbol idle period of the symbol clock signal, and an Ebox execution engine configured to execute micro-operations in one of the Eboxes based on the index of the Eboxes to perform an RF maintenance or calibration operation during the symbol idle period. Other embodiments are also disclosed.

In an embodiment, the RF controller further includes a configuration module containing configuration information of the timing generator.

In an embodiment, the configuration information includes 5G numerology information, sub carrier spacing information, or Time Division Duplex (TDD) pattern information.

In an embodiment, the Ebox execution engine is further configured to execute the micro-operations in the one of the Eboxes based on the index of the Eboxes such that the RF maintenance or calibration operation finishes within the symbol idle period.

In an embodiment, the symbol idle period includes s a down link (DL) symbol idle period.

In an embodiment, the symbol idle period includes an upper link (UL) symbol idle period.

In an embodiment, each of the Eboxes includes address value pairs to be written to an RF integrated circuit (RFIC) and front end module of the 5G modem during an execution of an Ebox.

In an embodiment, a number of the address value pairs in each of the Eboxes is bound by a 5G symbol time.

In an embodiment, the RF maintenance or calibration operation includes an RF transmitter (TX) and receiver (RX) switching operation.

In an embodiment, the RF maintenance or calibration operation includes a transmitter (TX) or receiver (RX) power temperature compensation operation.

In an embodiment, the RF maintenance or calibration operation includes a receiver (RX) Automated gain control (AGC) operation.

In an embodiment, the RF maintenance or calibration operation includes an RF transmitter (TX) and receiver (RX) in-phase/quadrature-phase (IQ) imbalance measurement for IQ calibration operation.

In an embodiment, the RF maintenance or calibration operation includes an in-phase/quadrature-phase (IQ) calibration operation.

In an embodiment, a 5G modem includes a 5G baseband unit configured to generate control signals and a radio frequency (RF) controller, which includes a timing generator configured to generate a symbol clock signal and a frame pattern in response to the control signals, a memory unit containing execution boxes (Eboxes) of micro-operations and an index of the Eboxes to be executed in response to detecting a symbol idle period of the symbol clock signal and generating the frame pattern, and an Ebox execution engine configured to execute micro-operations in one of the Eboxes based on the index of the Eboxes to perform an RF maintenance or calibration operation during the symbol idle period in response to the control signals.

In an embodiment, the RF controller further includes a configuration module containing configuration information of the timing generator, and wherein the configuration information comprises 5G numerology information, sub carrier spacing information, or Time Division Duplex (TDD) pattern information.

In an embodiment, the Ebox execution engine is further configured to execute the micro-operations in the one of the Eboxes based on the index of the Eboxes such that the RF maintenance or calibration operation finishes within the symbol idle period.

In an embodiment, each of the Eboxes includes address value pairs to be written to an RF integrated circuit (RFIC) and front end module of the 5G modem during an execution of an Ebox.

In an embodiment, a number of the address value pairs in each of the Eboxes is bound by a 5G symbol time.

In an embodiment, the RF maintenance or calibration operation includes an RF transmitter (TX) and receiver (RX) switching operation, a transmitter (TX) or receiver (RX) power temperature compensation operation, a receiver (RX) Automated gain control (AGC) operation, or an in-phase/quadrature-phase (IQ) calibration operation.

In an embodiment, a method for operating a radio frequency (RF) controller of a 5G modem involves using the RF controller, generating a symbol clock signal and using the RF controller, executing micro-operations in one of execution boxes (Eboxes) based an index of the Eboxes in response to detecting a 5G symbol idle period of the symbol clock signal to perform an RF maintenance or calibration operation during the 5G symbol idle period.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 depicts a 5G modem in accordance with an embodiment of the invention.
Fig. 2 illustrates a signal timing diagram of the 5G modem depicted in Fig. 1.
Fig. 3 depicts an RF Ebox & Symtick ring unit in accordance with an embodiment of the invention.
Fig. 4 is a process flow diagram of a method for operating a radio frequency (RF) controller of a 5G modem in accordance with an embodiment of the invention.
Fig. 5 is a process flow diagram of a method for operating an RF controller of a 5G modem in accordance with an embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

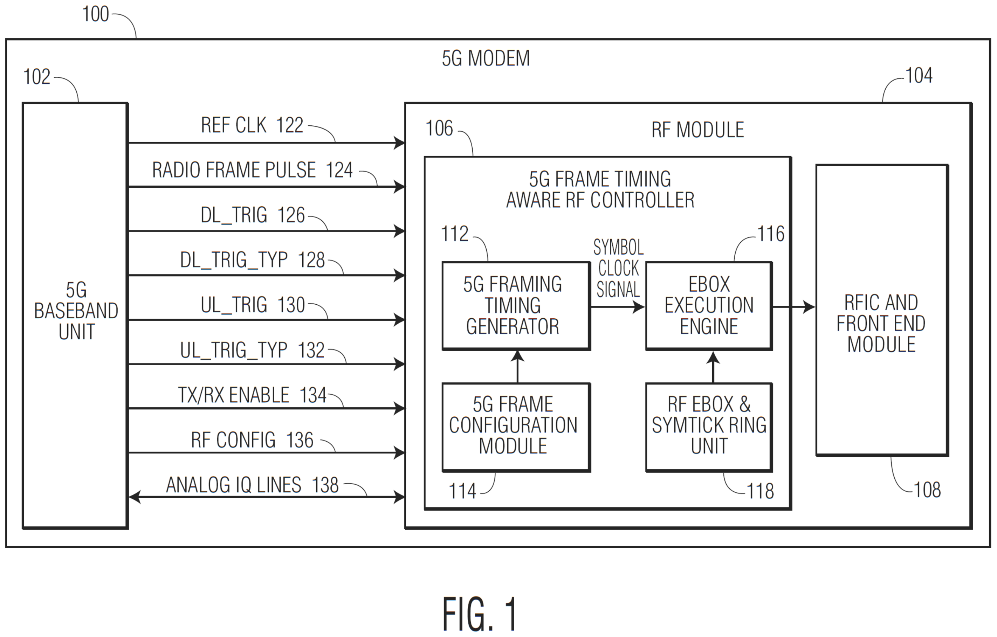

Fig. 1 depicts a 5G modem 100 in accordance with an embodiment of the invention. In the embodiment depicted in Fig. 1, the 5G modem 100 includes a 5G baseband unit 102 and an RF module 104. The 5G modem 100 can be used in various cellular applications, various wireless (WiFi) communications, various wired communications, such as consumer or enterprise applications, medical applications, computer applications, and/or industrial applications. In some embodiments, the 5G modem is compatible with a fifth-generation technology standard for cellular networks. Although the depicted 5G modem 100 is shown in Fig. 1 with certain components and described with certain functionality herein, other embodiments of the 5G modem may include fewer or more components to implement the same, less, or more functionality. In addition, although the 5G modem 100 is shown in Fig. 1 as being connected in a certain topology, the network topology of the 5G modem is not limited to the topology shown in Fig. 1.

In the embodiment depicted in Fig. 1, the 5G baseband unit 102 is configured to perform baseband processing. The 5G baseband unit 102 may be implemented in hardware (e.g., circuits), software, firmware, or a combination thereof. The 5G baseband unit 102 may be fully or partially implemented as an integrated circuit (IC) device. In some embodiments, the 5G baseband unit 102 and the RF module 104 are located in the same substrate and are implemented as one IC device (e.g., a system on chip (SOC) with integrated baseband and RF for 5G application). In some embodiments, the 5G baseband unit 102 and the RF module 104 are located in separate substrates and are implemented as separate IC devices (e.g., the RF module 104 implemented in a separate Field Programmable Gate Array (FPGA)).

In the embodiment depicted in Fig. 1, the RF module 104 is configured to perform RF processing. The RF module 104 may be implemented in hardware (e.g., circuits), software, firmware, or a combination thereof. The RF module 104 may be fully or partially implemented as an integrated circuit (IC) device. In the embodiment depicted in Fig. 1, the RF module 104 includes a 5G frame timing aware RF controller 106 (referred to as the RF controller 106) and an radio frequency integrated circuit (RFIC) and Front End Module (FEM) 108. In some embodiments, an RFIC is the RF transceiver chip, which is operably connected to an antenna. In some embodiments, a Front End Module includes components that are located between RFIC RF in/out pins and an antenna. Examples of the components that can be included in a Front End Module include a power amplifier (PA), a low noise amplifier (LNA), switches, and band pass filters. Although the depicted RF module 104 is shown in Fig. 1 with certain components and described with certain functionality herein, other embodiments of the RF module 104 may include fewer or more components to implement the same, less, or more functionality. In addition, although the RF module 104 is shown in Fig. 1 as being connected in a certain topology, the network topology of the RF module 104 is not limited to the topology shown in Fig. 1.

In the embodiment depicted in Fig. 1, the RF controller 106 includes a 5G frame timing generator 112, a 5G frame configuration module 114, an Ebox execution engine 116, and an RF Ebox & Symtick ring unit 118. In some embodiments, the RF controller 106 is implemented using a processor, such as a microcontroller, a host processor, a host, a digital signal processor (DSP), or a central processing unit (CPU). Although the depicted RF controller 106 is shown in Fig. 1 with certain components and described with certain functionality herein, other embodiments of the RF controller 106 may include fewer or more components to implement the same, less, or more functionality. In addition, although the RF controller 106 is shown in Fig. 1 as being connected in a certain topology, the network topology of the RF controller 106 is not limited to the topology shown in Fig. 1.

In some embodiments, the 5G frame configuration module 114 is a memory that includes a set of registers, which may contain software programs of the key components of 5G use case, i.e., Numerology, sub carrier spacing, Time Division Duplex (TDD) pattern (For TDD).

In some embodiments, the 5G frame timing generator 112 is configured to generate a symbol clock signal and to track frame boundaries. In some embodiments, the 5G frame timing generator 112 is a clock generator logic, which is configured based on Numerology & sub carrier spacing programmed by the software in configuration registers of the 5G frame configuration module 114. The 5G frame timing generator 112 may generate a symbol clock, a frame pulse, and/or downlink/uplink (DL/UL) trigger signals aligned to baseband trigger signals.

In some embodiments, the RF Ebox & Symtick ring unit 118 contains at least one RF Ebox memory and a SymTick Ring memory. In some embodiments, the RF Ebox memory contains a set of memory writes for RF control. In some embodiments, an execution box (Ebox) is a set of micro-operations to be performed on the RF module 104 for a given RF maintenance or calibration operation. For example, the RF Ebox memory may contain address value pairs to be written during the execution of an Ebox. Each box may contain enough write operations to finish within a symbol boundary. The Symtick (symbol timing) ring may be a memory containing one or more indices of Eboxes to execute. In some embodiments, the Symtick ring contains an index of an Ebox array to be executed.

In some embodiments, the Ebox execution engine 116 implements the core work of executing an Ebox when the Ebox is scheduled. For example, the Ebox execution engine 116 reads the address value pairs from the Ebox memory and writes to RFIC/ Front End Module of the RFIC and Front End Module 108. In some embodiments, the Ebox Execution engine 116 includes a resistor-transistor logic (RTL) logic that executes and plays the content of Eboxes according to a timing diagram.

In the embodiment depicted in Fig. 1, the 5G baseband unit 102 generates and outputs a reference clock signal (Ref clk) 122, a radio frame pulse 124, downlink and uplink trigger signals and trigger type signals DL_TRIG 126, DL_TRIG_TYP 128, UL_TRIG 130, UL_TRIG_TYP 132, a TX/RX enable signal 134, and an RF configuration signal (RF config) 136 to the RF module 104. In addition, analog in-phase/quadrature-phase (IQ) lines 138 are transmitted between the 5G baseband unit 102 and the RF module 104. A symbol clock signal may be generated internally within the 5G frame timing generator 112 based on the reference clock signal (Ref clk) 122 and the radio frame pulse 124. In some embodiments, Layer1 software of the 5G baseband unit 102 generates the UL_TRIG_TYPE signal 132 and the UL_TRIG signal 130. The UL_TRIG_TYPE signal 132 may contain information that indicates whether to target UL symbols or idle symbols for Ebox execution. The UL_TRIG signal 130 may contain information that indicates how many consecutive symbols within are available for execution of Eboxes. In some embodiments, Layer1 software of the 5G baseband unit 102 generates the DL_TRIG_TYPE signal 128 and the DL_TRIG signal 126. The DL_TRIG_TYPE signal 128 may contain information that indicates whether to target DL symbols or idle symbols for Ebox execution. The DL_TRIG signal 126 may contain information that indicates how many symbols within which the RF controller 106 can keep executing Eboxes. The 5G modem 100 can support both Frequency Division Duplex (FDD) and Time division duplex (TDD) 5G operations. For TDD operations, *_TYPE and *_TRIG signals can be generated internally by the 5G frame timing generator 112, instead of signals generated by the 5G baseband unit 102. Consequently, it simplifies the scheme by reducing the wires between the 5G baseband unit 102 and the RF module 104 and reducing overhead on L1 software for idle signaling.

Radio frequency (RF) systems, such as 5G systems, typically have a strict implied timing requirement for RF or radio control. Moreover, radio performance is dependent on constantly varying parameters, such as, temperature. Generally, RF systems, such as 5G systems, constantly perform RF maintenance for temperature variation compensations, transmitter/receiver (TX/RX), path control, or calibration. Traditionally, such maintenance operations can cause either link downtime or erratic performance. In contrast, the RF controller 106 depicted in Fig. 1 can perform RF maintenance without causing radio link disruption. The RF controller 106 adds a mechanism to convey 5G Frame timing between the 5G baseband unit 102 and the RFIC and Front End Module 108. For example, RF maintenance operations are scheduled by the RF controller 106 strictly during idle periods (e.g., when no TX or RX symbols are on air/being transmitted). In another example, RF maintenance operations are designed by the RF controller 106 such that a single operation is scheduled and finishes strictly within an idle symbol(s) time thus, ensuring that RF is available whenever a TX or RX symbol is required to be on air/being transmitted. The RF controller 106 can help in maintaining a high reliability requirement for use cases such as 5G Ultra-Reliable and Low-Latency Communications (URLLC).

In some embodiments, the 5G frame timing generator 112 is configured to generate a symbol clock signal and an optional 5G frame pattern for a given numerology such as a TDD pattern, the RF Ebox & Symtick ring unit 118 contains execution boxes (Eboxes) of micro-operations and an index of the Eboxes to be executed in response to the symbol clock signal, and the Ebox execution engine 116 is configured to execute micro-operations in one of the Eboxes based on the index of the Eboxes to perform an RF maintenance or calibration operation during a symbol idle period. In some embodiments, each Ebox has a corresponding index. A given Ebox may be executed in response to the index, symbol clock and control signals generated by the 5G frame timing generator 112. In some embodiments, the 5G frame configuration module 114 contains configuration information of the 5G frame timing generator 112. In some embodiments, the configuration information includes 5G numerology information, sub carrier spacing information, or Time Division Duplex (TDD) pattern information. In some embodiments, the Ebox execution engine 116 is further configured to execute the micro-operations in the one of the Eboxes based on the index of the Eboxes such that the RF maintenance or calibration operation finishes within the symbol idle period. In some embodiments, the symbol idle period includes a down link (DL) symbol idle period. In some embodiments, the symbol idle period includes an upper link (UL) symbol idle period. In some embodiments, each of the Eboxes includes address value pairs to be written during an execution of an Ebox. In some embodiments, a number of the address value pairs in each of the Eboxes is bound by a 5G symbol time. In some embodiments, the RF maintenance or calibration operation includes an RF transmitter (TX) and receiver (RX) switching operation. In some embodiments, the RF maintenance or calibration operation includes a TX or RX power temperature compensation operation. In some embodiments, the RF maintenance or calibration operation includes a receiver (RX) Automated gain control (AGC) operation. In some embodiments, the RF maintenance or calibration operation includes an in-phase/quadrature-phase (IQ) calibration operation. In some embodiments, the RF maintenance or calibration operation includes an RF TX and RX IQ imbalance measurement for IQ calibration operation.

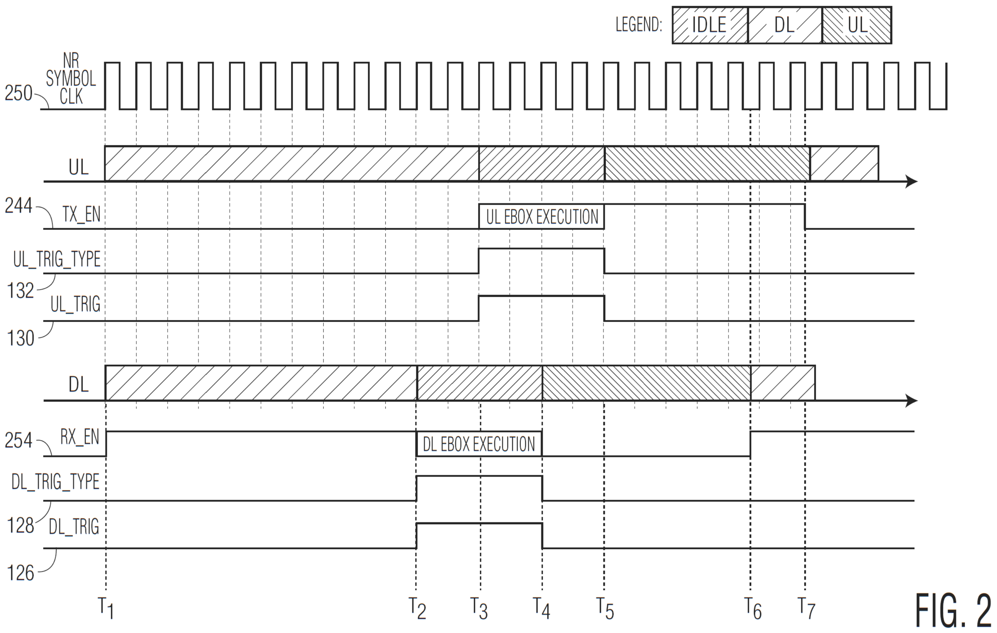

Fig. 2 illustrates a signal timing diagram of the 5G modem 100 depicted in Fig. 1. In the signal timing diagram of Fig. 2, example waveforms of a symbol clock signal 250 that is generated by the 5G frame timing generator 112, a transmitter enable signal TX_EN 244, the UL_TRIG_TYPE signal 132, the UL_TRIG signal 130, a receiver enable signal RX _EN 254, the DL_TRIG_TYPE signal 128, and the DL_TRIG signal 126 of the 5G modem 100 depicted in Fig. 1 are illustrated, respectively. The transmitter enable signal TX_EN and the receiver enable signal RX _EN may be derived from the TX/RX enable signal 134. At time point T1, the receiver enable signal RX_EN changes from logic zero to logic one and the DL operation starts. At time point T2, the DL_TRIG_TYPE signal and the DL_TRIG signal change from logic zero to logic one, the DL operation idles and the DL Ebox execution is conducted in a DL idle period. At time point T3, the UL_TRIG_TYPE signal and the UL_TRIG signal change from logic zero to logic one, the UL operation idles, and the UL Ebox execution is conducted in an UL idle period. At time point T4, the DL_TRIG_TYPE signal and the DL_TRIG signal change from logic one to logic zero, the DL Ebox execution ends. At time point T5, the UL_TRIG_TYPE signal and the UL_TRIG signal change from logic one to logic zero, the UL Ebox execution ends, and the UL operation starts. At time point T6, the receiver enable signal RX_EN changes from logic zero to logic one and the DL operation starts. At time point T7, the receiver enable signal RX _EN changes from logic one to logic zero.

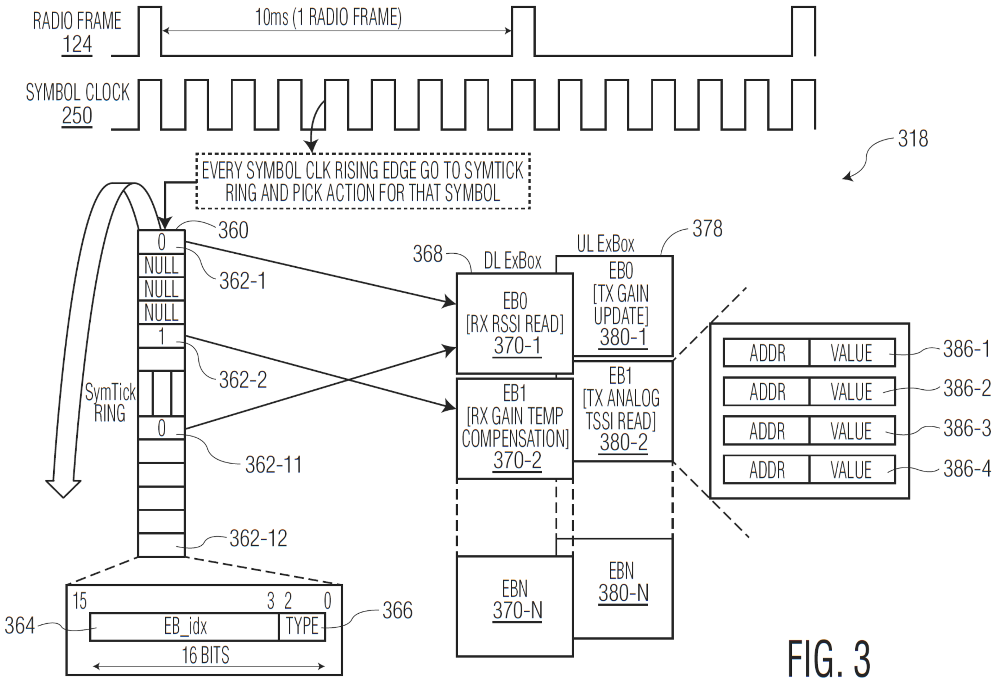

Fig. 3 depicts an RF Ebox & Symtick ring unit 318 in accordance with an embodiment of the invention. The RF Ebox & Symtick ring unit 318 is an embodiment of the RF Ebox & Symtick ring unit 118 of the RF module 104 of the 5G modem 100 depicted in Fig. 1. However, the RF Ebox & Symtick ring unit 118 depicted in Fig. 1 is not limited to the embodiment depicted in Fig. 3. In the embodiment depicted in Fig. 3, the RF Ebox & Symtick ring unit 318 includes a SymTick Ring 360, a DL Ebox memory 368, and a UL Ebox memory 378. Although the depicted RF Ebox & Symtick ring unit 318 is shown in Fig. 3 with certain components and described with certain functionality herein, other embodiments of the RF Ebox & Symtick ring unit 318 may include fewer or more components to implement the same, less, or more functionality. In addition, although the RF Ebox & Symtick ring unit 318 is shown in Fig. 3 as being connected in a certain topology, the network topology of the RF Ebox & Symtick ring unit 318 is not limited to the topology shown in Fig. 3.

In the embodiment depicted in Fig. 3, the DL Ebox memory 368 is organized as a set of Eboxes (EBOs)370-1, ..., 370-N, N is a positive integer, while the UL Ebox memory 378 is organized as a set of Eboxes 380-1, ..., 380-N. For example, EBO 370-1 is used for RX Received Signal Strength Indicator (RSSI) read purposes, while EB1 370-2 is for RX gain temperature compensation purposes. In another example, EBO 380-1 is for TX gain update purposes, EB1 380-2 is for TX analog Transmitted Signal Strength Indicator (TSSI) read purposes. In the embodiment depicted in Fig. 3, the DL Ebox memory 368 and the UL Ebox memory 378 are kept in separate in different memory such that DL and UL Ebox execution can take place independently during DL/UL idle symbols. In some embodiments, an Ebox is a set of micro-operations to be performed on the RF module 104 for a given RF maintenance or calibration operation. In some embodiments, the execution of each Ebox starts either aligned to an idle symbol start or in continuation of a previous Ebox. In some embodiments, the number of address-value pairs is programmed in an Ebox in such a way that all writes can be completed within a symbol time. For example, the EB1 380-2 includes fours address-value pairs 386-1, 386-2, 386-3, 386-4 that all writes can be completed within a symbol time. In an Ebox operation example, a gain change includes 4 8-bit register writes. Over Serial Peripheral Interface (SPI) at 25 megahertz (Mhz), a gain change operation can be finished in 2.56 microsecond (µs), which is well within symbol time (35.7µs, SCS 30).

In the embodiment depicted in Fig. 3, the Symtick ring 360 contains an array of Ebox indices 362-1, ..., 362-12. However, the number of Ebox indices that can be contained in the Symtick ring 360 is not limited to 12. For example, the Ebox index 362-12 includes an index of Ebox to execute (EB_idx) 364 and a type of Ebox 366 to which the index (EB_idx) belongs for either UL/DL. Based on the type of Ebox 366, the indexed Ebox from either the DL Ebox memory 368 or the UL Ebox memory 378 is picked. In some embodiments, in every symbol clock rising edge of a symbol clock signal 250, the RF module 104 (e.g., the 5G frame timing generator 112) goes to the Symtick ring 360 and picks action for that symbol. In some embodiments, when the RF module 104 (e.g., the 5G frame timing generator 112) determines that the current symbol is idle, the RF module 104 (e.g., the 5G frame timing generator 112) picks up the next index from the Symtick ring 360. In some embodiments, the next index is used to pick up the next Ebox, and all writes mentioned in the next Ebox are played. In some embodiments, Ebox execution and Symtick ring index increment for either data or idle symbols are based on UL/DL_TRIG_TYPE input and TDD frame structure configuration. In some embodiments, UL/DL_TRIG_TYPE input is driven from the 5G modem 100 or from the 5G frame timing generator 112 in the RF module 104. In some embodiments, TDD frame structure configuration is configured in the 5G frame configuration module 114..

In some embodiments, an execution box (Ebox) contains pairs of addresses and values that have to be written during execution. In some embodiments, the number of address value pairs in each Ebox is bound by symbol time and each Ebox cannot exceed the transactions crossing symbol boundary. Each Ebox execution can start either at the start of a symbol or somewhere in between. In some embodiments, the total number of Ebox executed in a symbol time is bounded by the symbol duration, and the execution of the last Ebox must not cross symbol boundary. Configuration may include maximum valid Ebox index, Ebox size, and/or Ebox maximum execution time. The size of an Ebox may depend on symbol time and the bus through which RF control writes are conducted. Maximum Ebox size may be calculated as : Symbol time / Time required for single register write.

In some embodiments, the Symtick ring 360 includes an array of 16 bit numbers. Each number may represent the work that needs to be done for a current symbol. At each symbol rising edge, the 5G frame timing generator 112 may pick an increment index, pick a next entry and execute according to content at that index. Each entry may represent one symbol. A total of two radio frames (e.g., the radio frame pulse 124 depicted in Figs. 1 and 3) worth of entries are supported. In some embodiments, the number of symbols (thus the valid entries) depends on sub carrier spacing (SCS). Each entry may consist of 13 bit Ebox index and 3 bit type (DL, Ul, Null). Configuration may include maximum Symtick ring index (maximum symbols), Symtick clock (with respect to symbol clock). In some embodiments, two radio frames are 20 millisecond (ms), the number of symbols are 4480 for 240 kilohertz (KHz) SCS, and size in bytes is 4480*2=8960 bytes.

Examples of RF maintenance and calibration operations that can be performed through Ebox executions include RF TX and RX switching (e.g., RF TX and RX ON-OFF operation during TDD), TX power temperature compensation (e.g., self-contained open loop TX power compensation), RX power temperature compensation, RX Automated gain control (AGC) (e.g., Reading analog RSSI at correct DL symbols), TX and RX IQ imbalance measurement for IQ calibration. Existing typical RF calibration mechanisms are not time precise, hence RF performance is impacted. Using Ebox executions and time precise RF calibrations, the RF module 104 can achieve good RF performance and high link reliability, even for aggressing 5G frame timing.

For example, TX/RX power temp compensation may be conducted for every 10-degree change. In a traditional 5G system, one or more additional software components perform monitoring and compensation tasks, which may cause power variations in ongoing TX/UL data. In contrast, the RF module 104 itself can perform monitoring of temperature and changes gain only during idle symbols, which avoids corruption of RX and TX transmissions because of ill-timed power change due to gain update.

In another example, RX AGC - Reading analog Received Signal Strength Indicator (RSSI) may be conducted whenever radio channel conditions change. In a traditional 5G system, RSSI is measured over unknown frame boundaries. In contrast, the RF module 104 can measure the analog RSSI for exact DL symbols and ignore any other symbols, resulting in more accurate analog RSSI measurements.

In another example, IQ calibration - IQ imbalance measurement may be conducted every 20-30-degree temp change. A traditional 5G system usually has to stop the 5G traffic to enter calibration mode in order to perform IQ imbalance measurement and derive compensation coefficients. In contrast, the RF module 104 can perform IQ imbalance measurements during symbols when both DL and UL are idle, resulting in no radio link downtime for IQ calibration.

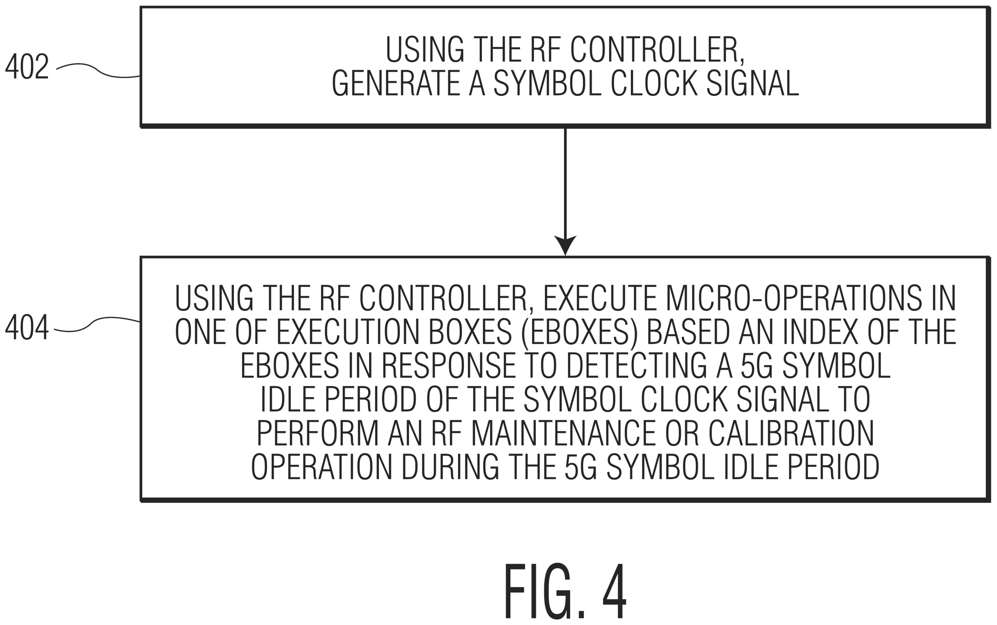

Fig. 4 is a process flow diagram of a method for operating a radio frequency (RF) controller of a 5G modem in accordance with an embodiment of the invention. At block 402, using the RF controller, a symbol clock signal is generated. At block 404, using the RF controller, micro-operations in one of execution boxes (Eboxes) are executed based an index of the Eboxes in response to detecting a 5G symbol idle period of the symbol clock signal to perform an RF maintenance or calibration operation during the 5G symbol idle period. The RF controller may be the same as or similar to the RF controller 106 depicted in Fig. 1.

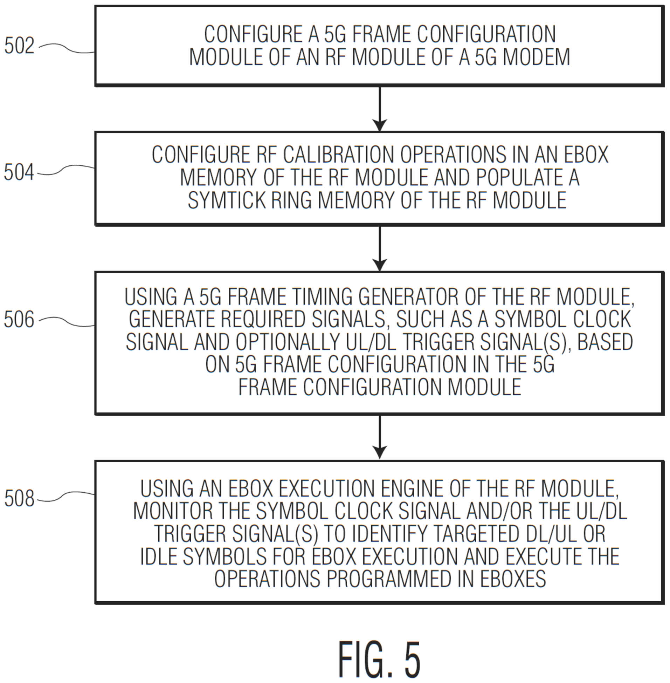

Fig. 5 is a process flow diagram of a method for operating an RF controller of a 5G modem in accordance with an embodiment of the invention. At block 502, a 5G frame configuration module of an RF module of a 5G modem is configured. At block 504, RF calibration operations in an Ebox memory of the RF module are configured and a Symtick ring memory of the RF module is populated. At this point, Ebox execution is enabled. At block 506, using a 5G frame timing generator of the RF module, required signals, such as a symbol clock signal and optionally UL/DL trigger signal(s), are generated based on 5G frame configuration in the 5G frame configuration module. At block 508, using an Ebox execution engine of the RF module, the symbol clock signal and/or the UL/DL trigger signal(s) are monitored to identify targeted DL/UL or idle symbols for Ebox Execution and execute the operations programmed in Eboxes. The RF controller may be the same as or similar to the RF controller 106 depicted in Fig. 1. The 5G frame configuration module may be the same as or similar to the 5G frame configuration module 114 depicted in Fig. 1. The Ebox memory and the Symtick ring memory may be the same as or similar to the RF Ebox & Symtick ring unit 118 depicted in Fig. 1. The 5G frame timing generator may be the same as or similar to the 5G frame timing generator 112 depicted in Fig. 1. The Ebox execution engine may be the same as or similar to the Ebox execution engine 116 depicted in Fig. 1.

Embodiments of a radio frequency (RF) controller for a 5G modem, a 5G modem, and a method for operating an RF controller of a 5G modem are disclosed. In an embodiment, an RF controller for a 5G modem includes a timing generator configured to generate a symbol clock signal, a memory unit containing execution boxes (Eboxes) of micro-operations and an index of the Eboxes to be executed in response to detecting a symbol idle period of the symbol clock signal, and an Ebox execution engine configured to execute micro-operations in one of the Eboxes based on the index of the Eboxes to perform an RF maintenance or calibration operation during the symbol idle period.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A radio frequency (RF) controller for a 5G modem, the RF controller comprising:
a timing generator configured to generate a symbol clock signal;
a memory unit containing a plurality of execution boxes (Eboxes) of micro-operations and an index of the Eboxes to be executed in response to detecting a symbol idle period of the symbol clock signal; and
an Ebox execution engine configured to execute a plurality of micro-operations in one of the Eboxes based on the index of the Eboxes to perform an RF maintenance or calibration operation during the symbol idle period.

2. The RF controller of claim 1, further comprising a configuration module containing configuration information of the timing generator.

3. The RF controller of claim 2, wherein the configuration information comprises 5G numerology information, sub carrier spacing information, or Time Division Duplex (TDD) pattern information.

4. The RF controller of any of claims 1 to 3, wherein the Ebox execution engine is further configured to execute the micro-operations in the one of the Eboxes based on the index of the Eboxes such that the RF maintenance or calibration operation finishes within the symbol idle period.

5. The RF controller of any preceding claim, wherein the symbol idle period comprises a down link (DL) symbol idle period.

6. The RF controller of any preceding claim, wherein the symbol idle period comprises an upper link (UL) symbol idle period.

7. The RF controller of any preceding claim, wherein each of the Eboxes comprises a plurality of address value pairs to be written to an RF integrated circuit (RFIC) and front end module of the 5G modem during an execution of an Ebox.

8. The RF controller of claim 7, wherein a number of the address value pairs in each of the Eboxes is bound by a 5G symbol time.

9. The RF controller of any preceding claim, wherein the RF maintenance or calibration operation comprises an RF transmitter (TX) and receiver (RX) switching operation.

10. The RF controller of any preceding claim, wherein the RF maintenance or calibration operation comprises a transmitter (TX) or receiver (RX) power temperature compensation operation.

11. The RF controller of any preceding claim, wherein the RF maintenance or calibration operation comprises a receiver (RX) Automated gain control (AGC) operation.

12. The RF controller of any preceding claim, wherein the RF maintenance or calibration operation comprises an RF transmitter (TX) and receiver (RX) in-phase/quadrature-phase (IQ) imbalance measurement for IQ calibration operation.

13. The RF controller of any preceding claim, wherein the RF maintenance or calibration operation comprises an in-phase/quadrature-phase (IQ) calibration operation.

14. A 5G modem comprising:
a 5G baseband unit configured to generate a plurality of control signals; and the radio frequency (RF) controller of any preceding claim.

15. A method for operating a radio frequency (RF) controller of a 5G modem, the method
comprising:
using the RF controller, generating a symbol clock signal; and
using the RF controller, executing a plurality of micro-operations in one of a plurality of execution boxes (Eboxes) based an index of the Eboxes in response to detecting a 5G symbol idle period of the symbol clock signal to perform an RF maintenance or calibration operation during the 5G symbol idle period.
